# EUROPEAN PATENT SPECIFICATION

(11) **EP 1 301 311 B1**
(45) Date of publication and mention of the grant of the patent: **14.09.2005**
(21) Application number: 01934059.5
(22) Date of filing: 16.05.2001
(51) Int. Cl.: B24B 27/06, B23D 21/08

(54) **APPARATUS FOR MACHINING, ESPECIALLY CUTTING TUBULAR OR ROUND SECTION BODIES**
VORICHTUNG ZUM BEARBEITEN, INSBESONDERE TRENNEN VON KÖRPERN MIT ROHRFÖRMIGEM ODER RUNDEM QUERSCHNITT
MACHINE A USINER, NOTAMMENT A DECOUPER DES CORPS DE SECTION TUBULAIRE OU RONDE

(30) Priority: 30.06.2000 FI 20001556
(43) Date of publication of application: 16.04.2003
(73) Proprietor: Exact Tools Oy, 00100 Helsinki (FI)
(72) Inventor: MAKKONEN, Seppo, FIN-00770 Helsinki (FI)
(74) Representative: LEITZINGER OY
(86) International application number: PCT/FI2001/000476
(87) International publication number: WO 2002/002271

(56) References cited:
- DE-A1- 3 045 262
- US-A- 4 625 464
- US-A- 5 081 768
- US-A- 5 349 751

## Description

The invention relates to an apparatus for machining, especially cutting tubular or round section bodies, said apparatus comprising a gripping mechanism, which is adapted to be braced on said machinable body rotatably around the same and which gripping mechanism is provided with a machining unit fitted with adjusting means for moving said machining unit relative to the gripping mechanism towards or away from the machinable body, and which gripping mechanism includes a frame section and first and second arms extending therefrom, the gripping mechanism being adapted to brace against the machinable body by means of bracing elements mounted on the frame section and the arms, (see for example US-A-4 625 464).

There is a prior known pipe cutter, comprising a C-shaped frame provided with two rotatably bearing-mounted support wheels and a disc blade adjustable relative to the same. As the cutter is rotated upon said support wheels and disc blade around a pipe, while moving the disc blade towards the support wheels, the pipe will be cut. The process is slow and tedious, resulting in a deformation of the pipe and a cut surface with a burr, which must be cleaned in a separate process. The pipe cutter is only good for cutting. The pipe cutter of a given size is only good for pipes of a given diametral range. Consequently, varying pipe sizes require the use of various size pipe cutters. Varying pipe materials also require a frequent replacement of the cutting blade.

The publication DE 27 56 529 discloses an apparatus as set forth above. However, its use always requires a multitude of adjustment procedures every time there is a change in the size of a pipe to be cut.

It is an object of the invention to provide an apparatus for machining or handling tubular or round section bodies, said apparatus being especially good for cutting, but which apparatus, depending on its extra features, can also be used for other types of machining or handling, e.g. for making weld chamfers or for joining pipes by butt welding, and said apparatus being quickly and reliably adaptable for use with various size bodies at any point along the length of the body.

According to the invention, this object is accomplished by an apparatus according to claim 1.

In an apparatus of the invention, the gripping mechanism constitutes an independent assembly, to which a machining unit or the like is linked in a manner adjustable with respect to the gripping mechanism.

In a particularly preferred embodiment for an apparatus of the invention, wherein the apparatus is principally applied in the cutting of pipes or the like, the arrangement is such that the machining unit is constituted by a circular saw, which is braced to the gripping mechanism pivotably about an axis parallel to its axis of rotation and to the centre axis of a tubular or round section body presently in a machining or handling position. In this case, the apparatus is preferably designed as a hand tool. Hence, the cutting of a pipe is performed in such a way that the gripping mechanism is braced to a pipe to be cut, followed by pressing the circular saw against the pipe until the blade in its lower position has penetrated the pipe wall. This is followed by rotating the gripping mechanism and the saw around the pipe, while maintaining the relative position thereof, whereby the pipe is cut. Alternatively, the gripping mechanism and the saw are maintained stationary and the pipe is rotated.

Thus, the apparatus offers a multitude of benefits, including e.g. the following features:
- The use of a circular saw blade, especially a circular blade fitted with hard metal tips, readily enables the cutting of a number of pipe materials over a wide range of diameters.
- The cutting occurs quickly, with no burr formation and no pipe deformation.
- The machining produces hardly any sparking, thus no hot work permit is required unlike in the use of e.g. a conventional angle grinder.
- The cutting proceeds always in a straight line, producing excellent cutting trace.
- The circular blade sawing angle does not change during the cutting, the blades thus enjoying a service life and sharpening intervals substantially longer than those of a conventional cutting saw, the latter performing the cutting by means of a top feeding, large-diameter circular blade.
- The ability to use small-diameter, hence attractively priced circular blades.
- The apparatus can be maintained low weight, making it a highly useful hand tool.

The invention will be described now in more detail with reference to the accompanying drawing, in which:
- Fig. 1: shows one preferred embodiment of the invention in a schematic plan view.
- Fig. 2: shows a section along a line II-II in fig. 1.

Regarding an apparatus of the invention for machining or handling tubular or round section bodies 1, the drawing depicts an application in which the apparatus is used for cutting a pipe 1. In the illustrated embodiment, a machining unit 3 comprises a circular saw and the apparatus is designed as a hand tool in the example.

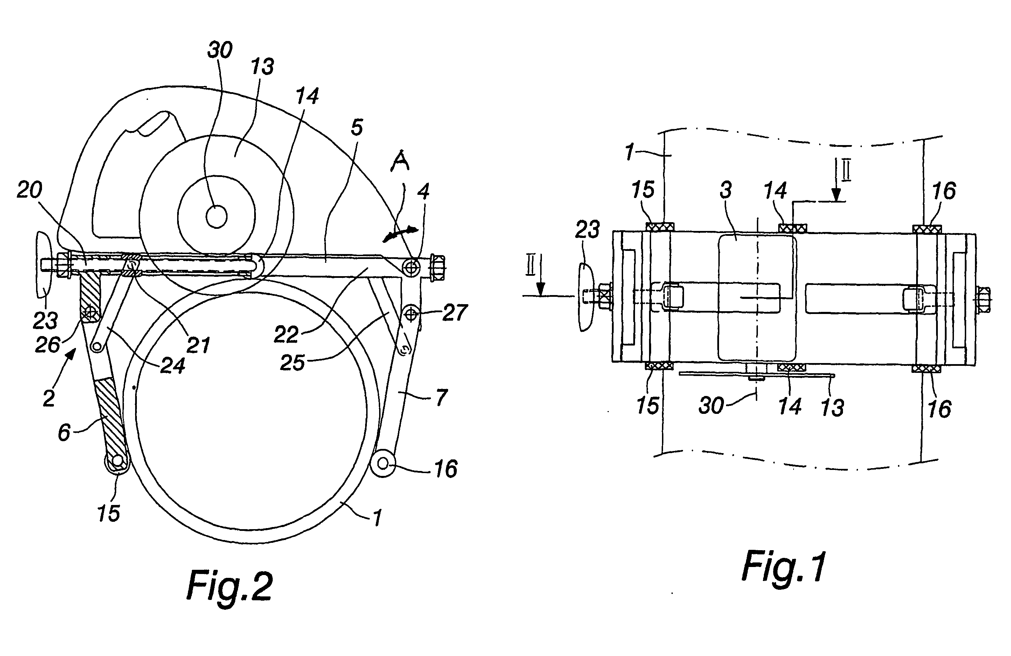

The apparatus comprises a gripping mechanism generally designated by reference numeral 2, which is adapted to be braced on the pipe 1 rotatably around the same. Rotation proceeds in such a way that the apparatus remains stationary in the axial direction of the pipe. Wheels 14, 15, 16 included in the gripping mechanism 2, the number of each being two in the illustrated exemplary embodiment, as shown in fig. 1, are bearing mounted in such a way that, as the same are pressed against the external surface of the pipe 1, the gripping mechanism 2 can be rotated in a plane perpendicular to the centre axis of the pipe 1.

The gripping mechanism 2 is provided with a machining unit 3, constituted in the illustrated example by a circular saw which is pivotably attached by way of an axle 4 to the gripping mechanism 2 for moving the saw 3 relative to the gripping mechanism 2 towards or away from the pipe 1 (an arrow A, fig. 2). Unlike fig. 2, the axle 4 can be arranged also at the opposite end of the machining unit 3. The saw 3 has its blade 13 adapted to work from outside a rolling path common to the wheels 14, 15, 16.

The gripping mechanism 2 includes a frame section 5, and a first arm 6 and a second arm 7 extending therefrom. The gripping mechanism 2 is adapted to brace against the machinable body 1 by means of the wheels 14, 15, 16 or the like bracing elements mounted on the frame section 5 and the arms 6, 7. At one end, the arms 6, 7 are articulated to the frame section 5 of the gripping mechanism 2. The wheels 14, 15, 16 included in the arms 6, 7 are mounted on the free ends of the arms.

The gripping mechanism 2 has its frame section 5 rotatably and axially immovably provided with a threaded shaft 20. The threaded shaft 20 has its first end provided with a right hand thread carrying a first nut 21 and its second end with a left hand thread carrying a second nut 22. The threaded shaft 20 is fitted with an element 23, in the illustrated example with a turning knob, for rotating the threaded shaft 20.

For speeding up the opening and closing action implemented by means of the turning knob 23, the threaded shaft 20 may have one of its ends provided with a gearshift having individual transmissions for a quick action and the actual gripping.

The first arm 6 and the first nut 21 are articulated to each other by means of a first bracket 24. Respectively, the second arm 7 and the second nut 22 are articulated to each other by means of a second bracket 25.

Pivot axles 26, 27 between the arms 6, 7 and the gripping mechanism 2 are parallel to the axes of rotation for the wheels 14, 15, 16 mounted on the arms 6, 7 and the frame section 5. Each arm 6, 7, as well as the frame section 5, may be provided with one or more wheels 14, 15, 16. In the example shown in the drawing, the wheels 14, 15, 16 are set in pairs, as depicted in fig. 1.

Unlike the illustrated examples, the frame section 5 may have its wheels (or bracing elements) 14 arranged on two parallel shafts, the bracing to a machinable body being implemented by means of wheels 14, 15, 16 mounted on four shafts or axles. Especially with small-diameter bodies 1, this facilitates installation of the apparatus.

In the illustrated example, the machining unit 3 is constituted by a circular saw, which is mounted on the pivotable gripping mechanism 2 about an axle 4 parallel to its axis of rotation 30 and to the centre axis of a machinable body 1 presently in a machining or handling position.

The inventive apparatus operates as follows.

The gripping mechanism 2, along with its saw 3, is fitted around the pipe 1 at a desired cutting point and the gripping mechanism 2 is secured in this position by means of the turning knob 23. If necessary, the pipe 1 to be cut can be secured in a suitable vice (not shown). Securing the pipe 1 is by no means always necessary. Rotation of the turning knob 23 causes the nut 21 in the right hand section of the threaded shaft 20 and the nut 22 in the left hand section to travel either towards or away from each other according to the direction of rotation. Through the intermediary of the brackets 24, 25 and the arms 6, 7, the motion is transmitted also to the wheels 15, 16, which respectively move either towards or away from each other. Thus, rotation of the turning knob 23 can be used for pressing the wheels 14, 15, 16 at a desired force against the external surface of the pipe 1.

When the gripping mechanism 2 is secured to the pipe 1, the saw 3 can be pivoted towards the pipe 1 about the axle 4 set in the frame section 5 of the gripping mechanism 2, the saw 3 having its blade penetrate through the wall of the pipe 1 to its per se known adjustable lower position shown in fig. 2. This is followed by rotating the gripping mechanism 2, along with its saw 3, around the pipe 1 in the direction of an arrow B in fig. 2 until the pipe 1 is severed.

## Claims

1. An apparatus for machining, especially cutting tubular or round section bodies (1), said apparatus comprising a gripping mechanism (2), which is adapted to be braced on said machinable body (1) rotatably around the same and which gripping mechanism (2) is provided with a machining unit (3) fitted with adjusting means (4) for moving said machining unit (3) relative to the gripping mechanism (2) towards or away from the machinable body (1), and which gripping mechanism (2) includes a frame section (5) and first and second arms (6, 7) extending therefrom, the gripping mechanism (2) being adapted to brace against the machinable body (1) by means of bracing elements (14, 15, 16) mounted on the frame section (5) and the arms (6, 7), and which arms (6, 7) are at one end articulated to the frame section (5) of the gripping mechanism (2) and the bracing elements (15, 16) included in the arms (6, 7) are mounted on the free ends of the arms, **characterized in that** the machining unit (3) comprises a circular saw, which is pivotably mounted on the gripping mechanism (2) about an axle (4) parallel to its axis of rotation (30) and the centre axis of the machinable body (1) presently in a machining or handling position, that the frame section (5) of the gripping mechanism (2) is rotatably and axially immovably fitted with a threaded shaft (20), having at its first end a right hand thread with a first nut (21) and at its second end a left hand thread with a second nut (22), and said threaded shaft (20) being provided with an element (23) for rotating the threaded shaft (20), and
that the first arm (6) and the first nut (21) are articulated to each other by means of a first bracket (24) and the second arm (7) and the second nut (22) are articulated to each other by means of a second bracket (25).

2. An apparatus as set forth in claim 1, **characterized in that** the bracing element (14, 15, 16) comprises a wheel.

3. An apparatus as set forth in claim 2, **characterized in that** the arms (6, 7) and the gripping mechanism (2) are provided with intermediary pivot axles (26, 27), which are parallel to the axes of rotation for the wheels (14, 15, 16) mounted on the arms and the frame section (5).

4. An apparatus as set forth in claim 2, **characterized in that** each arm (6, 7) is provided with one or more wheels (15, 16).

5. An apparatus as set forth in claim 2, **characterized in that** the frame section (5) is provided with one or more wheels (14).

6. An apparatus as set forth in claim 1, **characterized in that** the frame section (5) is provided with two parallel axles for the bracing element (14).

7. An apparatus as set forth in any of claims 1-6, **characterized in that** the apparatus is designed as a hand tool.

## Patentansprüche

1. Vorrichtung zur maschinellen Bearbeitung, insbesondere zum Schneiden von rohrförmigen Körpern oder Rundkörpem (1), wobei besagte Vorrichtung einen Greifmechanismus (2) umfasst, der dazu geeignet ist, um auf besagtem bearbeitbaren Körper (1) drehbar um denselben befestigt zu werden und dessen Greifmechanismus (2) mit einer Maschineneinheit (3) ausgestattet ist, die mit Justierelementen (4) versehen ist, um besagte Maschineneinheit (3) relativ zum Greifmechanismus (2) zum bearbeitbaren Körper (1) hin oder von diesem weg zu bewegen, und der Greifmechanismus (2) ein Rahmenprofil (5) und erste und zweite, sich von dort verlaufende Arme (6, 7) umfasst, wobei der Greifmechanismus (2) dazu geeignet ist, um mittels Befestigungselementen (14, 15, 16), die auf dem Rahmenprofil (5) und den Armen (6, 7) montiert sind, gegen den bearbeitbaren Körper (1) befestigt zu werden, und wobei besagte Arme (6, 7) an einem Ende zum Rahmenprofil (5) des Greifmechanismus (2) hin durch Gelenke verbunden sind und die in den Armen (6, 7) enthaltenen Befestigungselemente (15, 16) auf den freien Enden der Arme montiert werden, **dadurch gekennzeichnet dass** die Maschineneinheit (3) eine Kreissäge umfasst, die drehbar auf dem Greifmechanismus (2) über eine Welle (4) parallel zu dessen Drehachse (30) und zur Zentralachse des sich gerade in einer Bearbeitungs- oder Bedienposition befindenden bearbeitbaren Körpers (1) montiert wird, dass das Rahmenprofil (5) des Greifmechanismus (2) drehbar und axial unbeweglich mit einer Gewindewelle (20) eingepasst ist, die an deren ersten Ende mit einem rechtsgängigen Gewinde mit einer ersten Mutter (21) und an deren zweiten Ende mit einem linksgängigen Gewinde mit einer zweiten Mutter (22) versehen ist und wobei besagte Gewindewelle (20) mit einem Element (23) zum Drehen der Gewindewelle (20) ausgestattet ist, und dass der erste Arm (6) und die erste Mutter (21) über eine erste Klammer (24) ineinander gegliedert sind und der zweite Arm (7) und die zweite Mutter (22) über eine zweite Klammer (25) ineinander gegliedert sind.

2. Vorrichtung nach Anspruch 1, **dadurch gekennzeichnet, dass** das Befestigungselement (14, 15, 16) ein Rad umfasst.

3. Vorrichtung nach Anspruch 2, **dadurch gekennzeichnet, dass** die Arme (6, 7) und der Greifmechanismus (2) mit Zwischen-Drehachsen (26, 27) ausgestattet sind, die parallel zu den Drehachsen für die Räder (14, 15, 16) auf den Armen und dem Rahmenprofil (5) montiert sind.

4. Vorrichtung nach Anspruch 2, **dadurch gekennzeichnet, dass** jeder Arm (6, 7) mit einem oder mehreren Rädern (15, 16) ausgestattet ist.

5. Vorrichtung nach Anspruch 2, **dadurch gekennzeichnet, dass** das Rahmenprofil (5) mit einem oder mehreren Rädern (14) ausgestattet ist.

6. Vorrichtung nach Anspruch 1, **dadurch gekennzeichnet, dass** das Rahmenprofil (5) mit zwei parallelen Achsen für das Befestigungselement (14) ausgestattet ist.

7. Vorrichtung nach irgendeinem der Patentansprüche 1 - 6, **dadurch gekennzeichnet, dass** die Vorrichtung als ein Handwerkzeug entworfen wird.

## Revendications

1. Machine à usiner, notamment à découper des éléments de section tubulaire ou ronde (1), ladite machine comprenant un mécanisme de serrage (2), qui est adapté pour être attaché sur ledit corps usinable (1) de façon orientable autour de celui-ci et dont le mécanisme de serrage (2) est pourvu d'une unité d'usinage (3) adaptée avec des moyens d'ajustement (4) pour rapprocher ou éloigner ladite unité d'usinage (3) du corps usinable (1) relativement au mécanisme de serrage (2), et dont le mécanisme de serrage (2) inclut une section de structure (5) depuis laquelle s'étendent le premier et le deuxième bras (6, 7), le mécanisme de serrage (2) étant adapté pour s'attacher contre le corps usinable (1) au moyen d'éléments de renforcement (14, 15, 16) montés sur la section de structure (5) et les bras (6, 7), et dont les bras (6, 7) sont articulés à une extrémité de la section de structure (5) du mécanisme de serrage (2) et les éléments de renforcement (15, 16) inclus dans les bras (6, 7) sont montés sur les extrémités libres des bras, **caractérisée en ce que** l'unité d'usinage (3) comprend une scie circulaire montée de façon à pouvoir pivoter sur le mécanisme de serrage (2) près d'un axe (4) parallèle à son axe de rotation (30) et l'axe de centre du corps usinable (1) dans une position d'usinage ou de maniement, **en ce que** la section de structure (5) du mécanisme de serrage (2) est munie de façon orientable et axialement immuable d'un arbre fileté (20), ayant à sa première extrémité une vis à droite avec un premier écrou (21) et à sa deuxième extrémité une vis à gauche avec un deuxième écrou (22) et ledit arbre fileté (20) étant pourvu d'un élément (23) pour faire tourner l'arbre fileté (20), et **en ce que** le premier bras (6) et le premier écrou (21) sont articulés l'un à l'autre au moyen d'un premier support (24) et le deuxième bras (7) et le deuxième écrou (22) sont articulés l'un à l'autre au moyen d'un deuxième support (25).

2. Machine selon la revendication 1, **caractérisée en ce que** l'élément d'attache (14, 15, 16) comprend une roue.

3. Machine selon la revendication 2, **caractérisée en ce que** les bras (6, 7) et le mécanisme de serrage (2) sont pourvus d'axes de pivot intermédiaires (26, 27) parallèles aux axes de rotation pour les roues (14, 15, 16) montées sur les bras et la section de structure (5).

4. Machine selon la revendication 2, **caractérisée en ce que** chaque bras (6, 7) est pourvu d'une ou de plusieurs roues (15, 16).

5. Machine selon la revendication 2, **caractérisée en ce que** la section de structure (5) est pourvue d'une ou de plusieurs roues (14).

6. Machine selon la revendication 1, **caractérisée en ce que** la section de structure (5) est pourvue de deux axes parallèles pour l'élément d'attache (14).

7. Machine selon l'une quelconque des revendications 1-6, **caractérisée en ce que** le dispositif est conçu comme un outil à main.
